# EUROPEAN PATENT APPLICATION

(11) **EP 3 524 405 A1**
(43) Date of publication of application: **14.08.2019**
(21) Application number: 18183120.7
(22) Date of filing: 12.07.2018
(51) Int. Cl.: B29C 64/106, B29C 64/118, B29C 64/205, B29B 13/06

(54) **THREE-DIMENSIONAL PRINTING NOZZLE, THREE-DIMENSIONAL PRINTING NOZZLE ASSEMBLY AND THREE-DIMENSIONAL PRINTING APPARATUS**

(30) Priority: 12.02.2018 CN 201810143832
(71) Applicant: XYZprinting, Inc., New Taipei City 22201 (TW); Kinpo Electronics, Inc., New Taipei City 22201 (TW)
(72) Inventor: Hsieh, Chi-Wen, 22201 New Taipei City (TW); Wu, Chung-Hsuan, 22201 New Taipei City (TW); Lee, Yang-Teh, 22201 New Taipei City (TW)
(74) Representative: 2K Patentanwälte Blasberg Kewitz & Reichel

(57) **Abstract**

A three-dimensional printing nozzle (110), a three-dimensional printing nozzle assembly, and a three-dimensional printing apparatus are provided. The three-dimensional printing nozzle includes a nozzle body (111) having an inlet and an outlet, a driving unit (112) disposed in the nozzle body, a first heating unit (113), and a first heat dissipation unit (114). A particle forming material is adapted to enter the nozzle body from the inlet. The driving unit is configured for pushing the particle forming material to move from the inlet to the outlet. The first heating unit is disposed in the nozzle body for heating and melting the particle forming material and extrudes a melted forming material out of the nozzle body from the outlet through the driving unit. The first heat dissipation unit is disposed in the nozzle body and located between the first heating unit and the inlet to reduce heat transmitted from the first heating unit to the inlet.

## Description

### TECHNICAL FIELD

The disclosure relates to a three-dimensional printing nozzle, a three-dimensional printing nozzle assembly, and a three-dimensional printing apparatus.

### BACKGROUND

With the advance in computer-aided manufacturing (CAM), rapid prototyping (RP) has been developed by manufacturing industries, which can rapidly fabricate original concept designs. The rapid prototyping technology may provide geometric shapes without limitations, and excellence of the rapid prototyping technology is better demonstrated in more complex components. Further, manpower and processing time can be greatly reduced, and designed components on three-dimensional computer-aided design can be realistically rendered in a short amount of time. Not only can the components be touched, but the geometric curves thereof can also be truly appreciated. Moreover, the assembly ability of the components can be tested, and even functional tests may be performed thereto.

A number of rapid prototyping methods are available, such as fused deposition modeling (FDM), laminated object manufacturing (LOM), and so on. However, in most three-dimensional printing apparatuses that currently use the rapid prototyping methods for forming three-dimensional objects, only one printing head is provided. Thus, in terms of the forming material, not until the printing nozzle is heated, driven, and extruded does the melted forming material be smoothly extruded and printed onto the platform. In this way, the time of manufacturing the three-dimensional object is limited to the above and that the material forming efficiency is less likely to be increased.

Further, in terms of a roll-to-roll three-dimensional printing apparatus, as the forming material is a wire material with a fixed outer diameter, as such, when printing of a large volume is required (e.g., a three-dimensional object of a relatively large volume), longer time for manufacturing is required based on the above. Moreover, as limited by the material properties of the wire material, not all of the materials can be smoothly transformed into the wire material to enable the outer diameters of the materials to meet the requirement of three-dimensional printing.

To sum up, improvements for solving the foregoing problems is an important issue for the industry.

### SUMMARY

A three-dimensional printing nozzle, a three-dimensional printing nozzle assembly, and a three-dimensional printing apparatus are introduced herein in which a process efficiency of three-dimensional printing is increased through a three-dimensional printing nozzle of a particle type.

According to an embodiment of the disclosure, a three-dimensional printing nozzle includes a nozzle body, a driving unit, a first heating unit, and a first heat dissipation unit. The nozzle body includes a material inlet zone and a material outlet zone, and a particle forming material is adapted to enter into the nozzle body from the material inlet zone. The driving unit is disposed in the nozzle body and is configured for pushing the particle forming material in the nozzle body to move from the material inlet zone to the material outlet zone. The first heating unit is disposed in the nozzle body and configured for heating and melting the particle forming material in the nozzle body and extrudes a melted forming material out of the nozzle body from the material outlet zone through the driving unit.

According to an embodiment of the disclosure, a three-dimensional printing nozzle assembly includes a nozzle body, a driving unit, a first heating unit, a first heat dissipation unit, and a material feeding hopper. The nozzle body includes a material inlet zone and a material outlet zone, and a particle forming material is adapted to enter into the nozzle body from the material inlet zone. The driving unit is disposed in the nozzle body and is configured for pushing the particle forming material in the nozzle body to move from the material inlet zone to the material outlet zone. The first heating unit is disposed in the nozzle body and configured for heating and melting the particle forming material in the nozzle body and extrudes a melted forming material out of the nozzle body from the material outlet zone through the driving unit. The material feeding hopper is connected to the nozzle body to introduce the particle forming material into the material inlet zone.

According to an embodiment of the disclosure, a three-dimensional printing apparatus includes a control module and a three-dimensional printing nozzle. The nozzle body includes a material inlet zone and a material outlet zone, and a particle forming material is adapted to enter into the nozzle body from the material inlet zone. The driving unit is disposed in the nozzle body and electrically connected to the control module, the driving unit is controlled by the control module to push the particle forming material in the nozzle body to move from the material inlet zone to the material outlet zone. The first heating unit is disposed in the nozzle body and is electrically connected to the control module. The first heating unit is controlled by the control module to heat and melt the particle forming material in the nozzle body. The driving unit is controlled by the control module to extrude a melted forming material out of the nozzle body from the material outlet zone. The first heat dissipation unit is disposed in the nozzle body, located between the first heating unit and the material inlet zone, and electrically connected to the control module. The first heat dissipation unit is controlled by the control module to reduce heat transmitted from the first heating unit to the material inlet zone.

Several exemplary embodiments accompanied with figures are described in detail below to further describe the disclosure in details.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic view of a three-dimensional printing apparatus according to an exemplary embodiment of the disclosure.
FIG. 2 is a schematic diagram of electrical connections in the three-dimensional printing apparatus of FIG. 1.
FIG. 3 is an exploded view of part of components of the three-dimensional printing apparatus of FIG. 1.
FIG. 4 is a cross-sectional view of the components of FIG. 3.
FIG. 5 is an exploded view of part of the components of the three-dimensional printing apparatus of FIG. 1.
FIG. 6 is a schematic view of the components of FIG. 5.
FIG. 7 is a schematic view of a three-dimensional printing apparatus according to another exemplary embodiment of the disclosure.
FIG. 8 is a schematic view of a three-dimensional printing apparatus according to still another exemplary embodiment of the disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

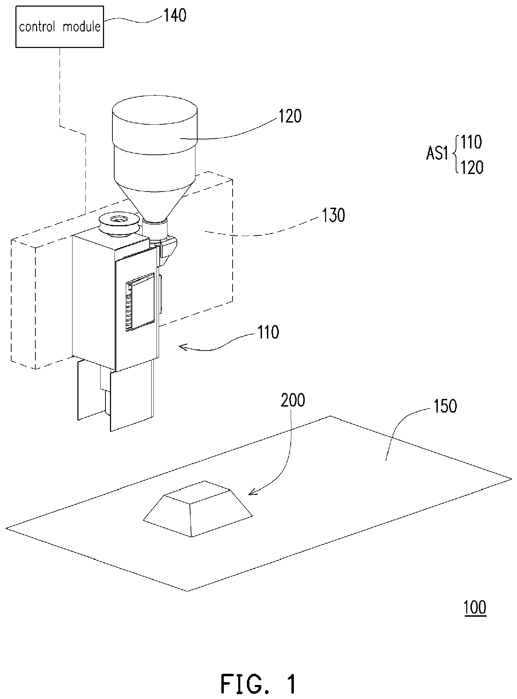

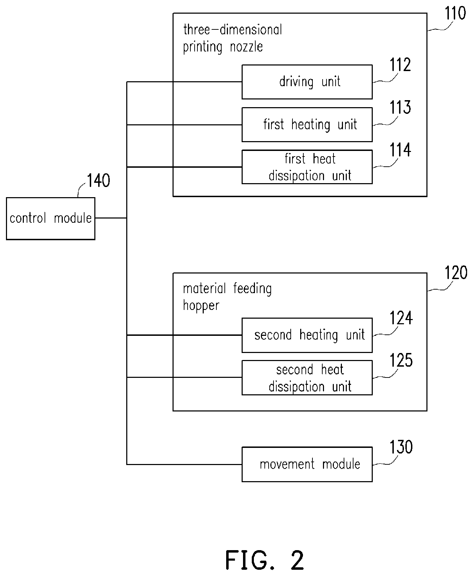

FIG. 1 is a schematic view of a three-dimensional printing apparatus according to an exemplary embodiment of the disclosure. FIG. 2 is a schematic diagram of electrical connections in the three-dimensional printing apparatus of FIG. 1. With reference to FIG. 1 and FIG. 2 together, a three-dimensional printing apparatus 100 includes a three-dimensional printing nozzle 110, a material feeding hopper 120, a movement module 130, a control module 140, and a platform 150 in this embodiment. Among them, the three-dimensional printing nozzle 110 is assembled onto the movement module 130, the material feeding hopper 120 is assembled to the three-dimensional printing nozzle 110 to from a three-dimensional printing nozzle assembly AS1, and the movement module 130 is electrically connected to the control module 140. Thus, the control module 140 can drive the three-dimensional printing nozzle 110 and the material feeding hopper 120 disposed on the three-dimensional printing nozzle 110 through the movement module 130 to move on the platform 150. At the same time, the three-dimensional printing nozzle 110 and the material feeding hopper 120 are electrically connected to the control module 140, and a three-dimensional object 200 can thereby be printed on the platform 150 accordingly.

Herein, the movement module 130 is, for example, a 3-axis (X-Y-Z) movement module or a gantry configured for driving the three-dimensional printing nozzle 110 to move on the platform 150.

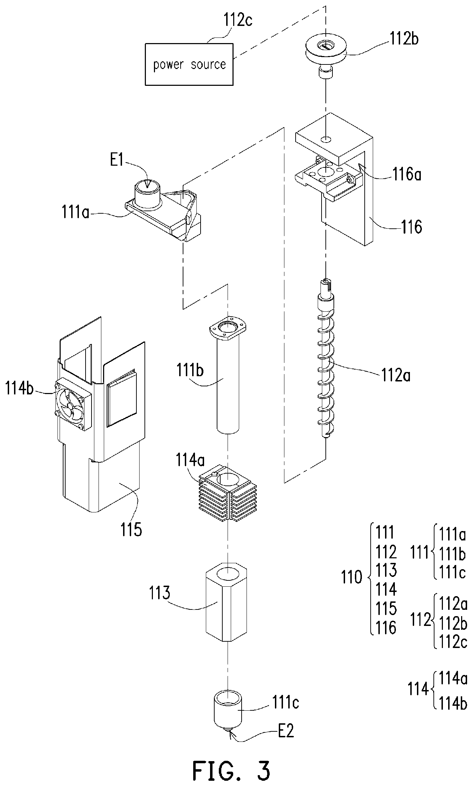

FIG. 3 is an exploded view of part of components of the three-dimensional printing apparatus of FIG. 1. With reference to FIG. 1 to FIG. 3 together, the three-dimensional printing nozzle 110 includes a nozzle body 111, a driving unit 112, a first heating unit 113, a first heat dissipation unit 114, a housing 115, and a holder 116 in this embodiment. The nozzle body 111 includes a part 111a, a part 111b, and a part 111c. Among them, the part 111a has an inlet E1 configured for receiving a particle forming material and thus may be regarded as a material inlet zone of the nozzle body, the part 111b is connected between the part 111a and the part 111c, and the part 111c has an outlet E2 configured for extruding a melted forming material out of the nozzle body 111 and thus may be regarded as a material outlet zone.

The driving unit 112 is disposed in the nozzle body 111, and the driving unit 112 includes a screw 112a, a driving wheel 112b, and a power source 112c connected to one another. Among them, the power source 112c is electrically connected to the control module 140 to be controlled by the control module 140 to drive the screw 112a to move in the nozzle body 111 through the driving wheel 112b. Moreover, the power source 112c is configured for pushing the particle forming material in the nozzle body 111 to move from the material inlet zone (part 111a) to the material outlet zone (part 111c).

The first heating unit 113 is disposed in and electrically connected to the nozzle body 111 to be controlled by the control module 140. As such, the first heating unit 113 is configured for heating and melting the particle forming material in the nozzle body 111 and extrudes a melted forming material out of the nozzle body 111 from the material outlet zone through the driving unit 112. The first heat dissipation unit 114 is disposed in the nozzle body 111, located between the first heating unit 113 and the material inlet zone (part 111a), and electrically connected to the control module 140. The first heat dissipation unit 114 is controlled by the control module 140 to reduce heat transmitted from the first heating unit 113 to the material inlet zone (part 111a).

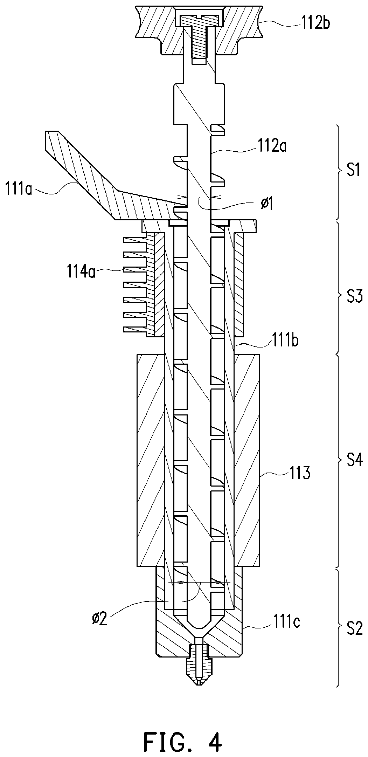

FIG. 4 is a cross-sectional view of the components of FIG. 3. With reference to FIG. 3 and FIG. 4, to be specific, the three-dimensional printing nozzle 110 of this embodiment is a three-dimensional printing nozzle of a particle type. Herein, the screw 112a is further divided into a first segment S1, a third segment S3, a fourth segment S4, and a second segment S2 in sequence. The part 111a corresponds to the first segment S1, that is, the particle forming material entering into the part 111a through the inlet E1 may be guided by the part 111a to be compiled in a chamber space between the screw 112a and the part 111b and may continue to move towards the outlet E2 when being driven by the screw 112a. At the same time, the particle forming material passing through the fourth segment S4 begins to melt as correspondingly affected by the heat provided by the first heating unit 113 and thus is extruded out of the nozzle body 111 from the part 111c (the material outlet zone) through the outlet E2 when being driven and extruded by the screw 112a.

In this embodiment, a diameter-to-length ratio of the screw 112a is between 8 and 12. The diameter-to-length ratio refers to a ratio of a bottom diameter (an outer diameter of the screw excluding a spiral portion) to a length (the length extending from the first segment S1 to the second segment S2) of the screw. That is, the length is 8 to 12 times greater than the bottom diameter of the screw in this embodiment. In this way, the particle forming material requires a more simple process when being added, heated and melted, mixed, and extruded. Further, an outer diameter *φ*2 of the screw 112a at the second segment S2 is substantially greater than an outer diameter *φ*1 at the first segment S1 because the forming material is heated and thus is melted from a particle shape to a melted state. As such, the screw 112a at the second segment S2 is required to provide a greater pressure so as to smoothly extrude the melted forming material out of the outlet E2. Therefore, as inner diameters (internal chamber volumes) of the part 111a and the part 111b are fixed, a chamber space (i.e., the outer diameter of the screw 112a is required to be increased gradually from the top to the bottom according to FIG. 4) at the second segment S2 is required to be reduced for reaching a level of compression required.

Besides, the third segment S3 of the screw 112a corresponds to the first heat dissipation unit 114, and the third segment S3 is located between the fourth segment S4 (corresponding to the first heating unit 113) and the first segment S1 (the material inlet zone). As such, the heat transmitted from the first heating unit 113 to the material inlet zone (the part 111a) may be reduced, and that the forming material at the first segment S1 and the third segment S3 is still maintained to be shaped as the particle shape. The forming material at the first segment S1 to the second segment S2 is thereby prevented from being melted, and the screw 112 is thereby prevented from running idle in the nozzle body 111.

Herein, the first heat dissipation unit 114 includes a heat dissipation fin 114a inserted by the part 111b, and the heat dissipation fin 114a is thus located between the first heating unit 113 and the part 111a. Further, the first heat dissipation unit 114 of this embodiment also includes a fan 114b disposed at the housing 115 and corresponding to the heat dissipation fin 114a for providing a heat dissipation effect to the heat dissipation fin 114a.

Note that the nozzle body 111 of this embodiment provides a quick release function. With reference to FIG. 1 and FIG. 3 together, in the nozzle body 111 of this embodiment, since the part 111a and the holder 116a are structurally matched, the part 111a may be embedded into an accommodating space 116a of the holder 116. The housing 115 is then assembled to the holder 116 to encapsulate the nozzle body 111, the driving unit 112, the first heating unit 113, and the first heat dissipation unit 114 (the heat dissipation fin 114a) for protection.

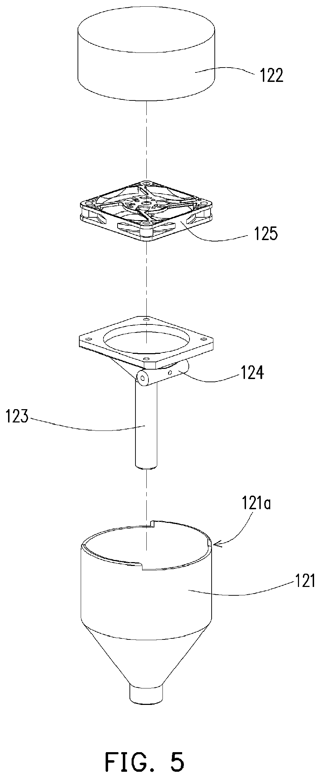

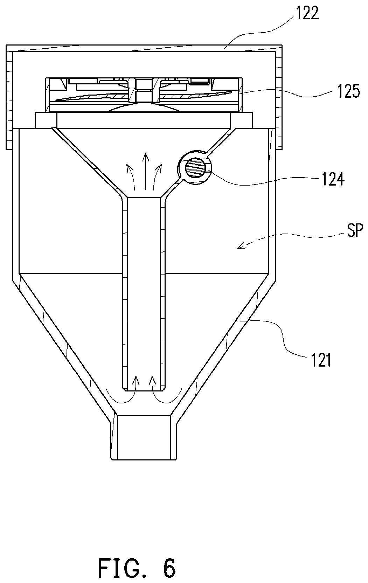

FIG. 5 is an exploded view of part of the components of the three-dimensional printing apparatus of FIG. 1. FIG. 6 is a schematic view of the components of FIG. 5. With reference to FIG. 1 and FIG. 2 and FIG. 5 and FIG. 6 together, in this embodiment, the material feeding hopper 120 includes a hopper body 121, a duct 123, a second heating unit 124, a second heat dissipation unit 125, and a cover body 122. Among them, the cover body 122 covers the hopper body 121, and that the duct 123, the second heating unit 124, and the second heat dissipation unit 125 are contained in an internal space SP. The hopper body 121 is connected to the material inlet zone (part 111a) of the nozzle body 111, and the particle forming material is adapted to be placed inside the hopper body 121. The second heating unit 124 is disposed in the hopper body 121 and is electrically connected to the control module 140, so as to heat the particle forming material in the internal space SP to reach a preheating temperature. The second heat dissipation unit 125 is, for example, a fan and is disposed in the hopper body 121 to maintain the particle forming material at the preheating temperature. In other words, the particle forming material placed in the internal space SP is preheated through the second heating unit 124, and time required to heat the particle forming material to the melted state after entering the nozzle body 111 may thus be reduced. Moreover, electric power required by the first heating unit 113 may also be reduced. Simultaneously, with the second heat dissipation unit 125 and the duct 123, moisture in the internal space SP may also be heated by the second heating unit 124, extracted by the second heat dissipation unit 125 through the duct 123 (as shown by the arrows in FIG. 6), and then dissipated outside the material feeding hopper 120 through a notch 121a of the hopper body 121. As such, the particle forming material is placed in a dry environment because water vapor is prevented from being attached to a surface of the particle forming material, which may affect the subsequent three-dimensional printing process. That is, the material feeding hopper 120 provides the particle forming material with drying and pre-heating effects through said components.

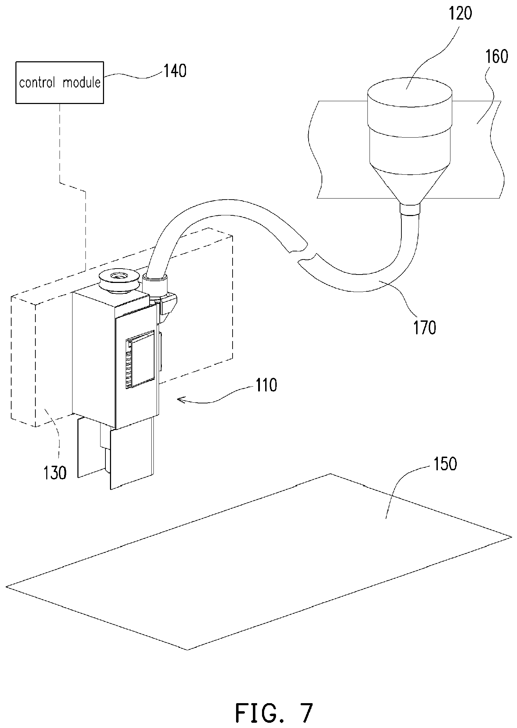

FIG. 7 is a schematic view of a three-dimensional printing apparatus according to another exemplary embodiment of the disclosure. With reference to FIG. 7, different from the foregoing embodiments, the three-dimensional printing nozzle 110 and the material feeding hopper 120 of this embodiment are disposed independently. As shown in FIG. 7, the three-dimensional printing nozzle 110 is still disposed on the movement module 130 and thus is controlled by the control module 140 and is able to move on the platform 150. Nevertheless, the material feeding hopper 120 is disposed on the fixed holder 160 and is connected between the three-dimensional printing nozzle 110 and the material feeding hopper 120 through a pipe 170 for providing materials as required. Thus, the three-dimensional printing nozzle 110 and the material feeding hopper 120 may be replaced independently by a user without affecting each other according to a three-dimensional printing requirement.

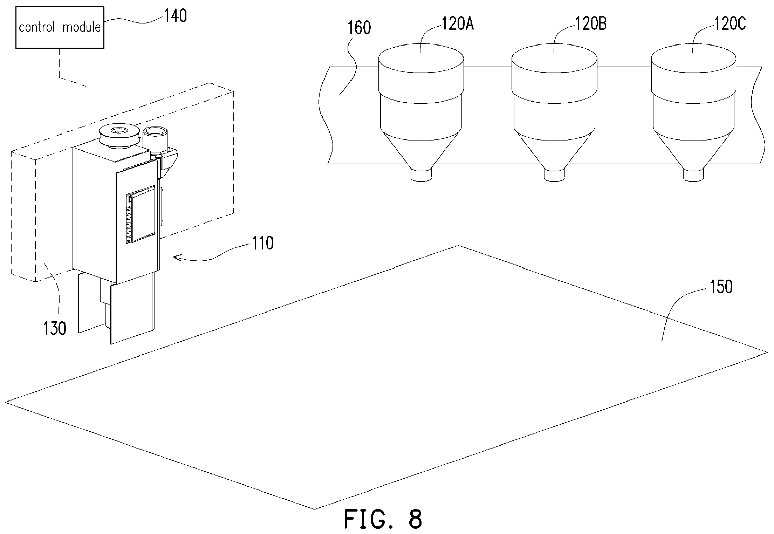

FIG. 8 is a schematic view of a three-dimensional printing apparatus according to still another exemplary embodiment of the disclosure. With reference to FIG. 8, different from the foregoing embodiments, the single three-dimensional printing nozzle 110 of this embodiment corresponds to a plurality of material feeding hoppers 120A, 120B, and 120C. That is, the material feeding hoppers 120A, 120B, and 120C of this embodiment are detachably disposed on the holder 160. The control module 140 moves the three-dimensional printing nozzle 110 to the required material feeding hopper 120A, 120B, or 120C to be assembled together with the required material feeding hopper 120A, 120B, and 120C through the movement module 130 according to the printing requirement, and the state shown in FIG. 1 is thereby achieved. When the material feeding hopper 120A, 120B, and 120C being assembled is required to be replaced, the original material feeding hopper is put back and another different material feeding hopper is assembled.

In addition, as shown in FIG. 7 and FIG. 8, the user may connect the pipe 170 shown in FIG. 7 to the three-dimensional printing nozzle 110 as well as one of the material feeding hoppers 120A, 120B, and 120C shown in FIG. 8, and the user may detach and assemble the pipe 170 to another material feeding hopper when replacement is required. As shown in the embodiment of FIG. 8, the three-dimensional printing nozzle may be widely applied when the user places plural material feeding hoppers at specific regions.

In view of the foregoing, in the embodiments of the disclosure, the forming material of the particle-type is adopted to serve as the material, and the forming material can thus be smoothly driven by the driving unit in the three-dimensional printing nozzle through the driving unit, the heating unit, and the heat dissipation unit. Next, the forming material is transformed to a melted state as heated by the heat provided by the heating unit in the moving process. The melted forming material can then be extruded out of the nozzle body by the driving unit, and the three-dimensional printing is thereby completed. In this way, the three-dimensional printing nozzle is no longer limited by the shape of the raw material, and the material discharging amount may thereby be effectively increased, and the efficiency of the three-dimensional printing process is further enhanced.

Further, the three-dimensional printing nozzle may be assembled with the material feeding hopper to allow the particle forming material to be placed in the material feeding hopper first to meet the material providing requirement. Simultaneously, as the heating unit and the heat dissipation unit are disposed in the material feeding hopper, the particle forming material in the material feeding hopper is maintained to be dry as required and may be heated to the required preheating temperature. As such, the time required for heating in the three-dimensional printing nozzle may be effectively reduced.

## Claims

1. A three-dimensional printing nozzle (110), wherein the three-dimensional printing nozzle (110) comprises:
a nozzle body (111), comprising a material inlet zone (E1) and a material outlet zone (E2), a particle forming material being adapted to enter into the nozzle body (111) from the material inlet zone (E1);
a driving unit (112), disposed in the nozzle body (111) and configured for pushing the particle forming material in the nozzle body (111) to move from the material inlet zone (E1) to the material outlet zone (E2);
a first heating unit (113), disposed in the nozzle body (111), configured for heating and melting the particle forming material in the nozzle body (111), and extruding a melted forming material out of the nozzle body (111) from the material outlet zone (E2) through the driving unit (112); and
a first heat dissipation unit (114), disposed in the nozzle body (111) and located between the first heating unit (113) and the material inlet zone (E1) to reduce heat transmitted from the first heating unit (113) to the material inlet zone (E1).

2. A three-dimensional printing nozzle assembly (AS1), wherein the three-dimensional printing nozzle assembly (AS1) comprises:
a three-dimensional printing nozzle (110) as claimed in claim 1; and
a material feeding hopper (120), connected to the nozzle body (111) to introduce the particle forming material into the material inlet zone (E1).

3. A three-dimensional printing apparatus (100), wherein the three-dimensional printing apparatus (100) comprises:
a three-dimensional printing nozzle (110) as claimed in claim 1; and
a control module (140), electrically connected to the driving unit (112), the first heating unit (113), and the first heat dissipation unit (114) respectively, wherein the driving unit (112) being controlled by the control module (140) to push the particle forming material in the nozzle body (111) to move from the material inlet zone (E1) to the material outlet zone (E2), the first heating unit (113) being controlled by the control module (140) to heat and melt the particle forming material in the nozzle body (111), the driving unit (112) being controlled by the control module (140) to extrude a melted forming material out of the nozzle body (111) from the material outlet zone (E2), and the first heat dissipation unit (114) being controlled by the control module (140) to reduce heat transmitted from the first heating unit (113) to the material inlet zone (E1).

4. The three-dimensional printing nozzle (110) as claimed in claims 1, 2, or3, wherein the driving unit (112) comprises a screw (112a) rotatably disposed inside the nozzle body (111), a first segment (S1) of the screw (112a) is located in the material inlet zone (E1), and a second segment (S2) of the screw (112a) is located in the material outlet zone (E2), and an outer diameter (*φ*2) of the second segment (S2) is greater than an outer diameter (*φ*1) of the first segment (S1).

5. The three-dimensional printing nozzle (110) as claimed in claim 4, wherein the screw (112a) is divided into the first segment (S1), a third segment (S3), a fourth segment (S4), and the second segment (S2) in sequence, wherein the third segment (S3) corresponds to the first heat dissipation unit (114), and the fourth segment (S4) corresponds to the first heating unit (113).

6. The three-dimensional printing nozzle (110) as claimed in claims 1, 2, or 3, wherein the driving unit (112) comprises a screw (112a) rotatably disposed inside the nozzle body (111), and a diameter-to-length ratio of the screw (112a) is between 8 and 12.

7. The three-dimensional printing nozzle (110) as claimed in claims 1, 2, or 3, wherein the first heat dissipation unit (114) is a heat dissipation fin, the three-dimensional printing nozzle (110) further comprises a housing (115) covering the nozzle body (111), and the first heat dissipation unit (114) further comprises a fan (114b) disposed at the housing (115) and corresponding to the heat dissipation fin.

8. The three-dimensional printing nozzle assembly (AS 1) as claimed in claim 2, wherein the material feeding hopper (120) comprises:
a hopper body (121), connected to the material inlet zone (E1) of the nozzle body (111), the particle forming material being adapted to be placed in the hopper body (121);
a second heating unit (124), disposed in the hopper body (121) to heat the particle forming material to reach a preheating temperature; and
a second heat dissipation unit (125), disposed in the hopper body (121) to maintain the particle forming material at the preheating temperature.

9. The three-dimensional printing apparatus (100) as claimed in claim 3, wherein the three-dimensional printing apparatus (100) further comprises:
a material feeding hopper (120), connected to the nozzle body (111) to introduce the particle forming material into the material inlet zone (E1).

10. The three-dimensional printing apparatus (100) as claimed in claim 9, wherein the material feeding hopper (120) comprises:
a hopper body (121), connected to the material inlet zone (E1) of the nozzle body (111), the particle forming material being adapted to be placed in the hopper body (121);
a second heating unit (124), disposed in the hopper body (121) and electrically connected to the control module (140) to heat the particle forming material to reach a preheating temperature; and
a second heat dissipation unit (125), disposed in the hopper body (121) and electrically connected to the control module (140) to maintain the particle forming material at the preheating temperature.

11. The three-dimensional printing apparatus (100) as claimed in claim 3, wherein the three-dimensional printing apparatus (100) further comprises:
a movement module (130), electrically connected to the control module (140), the three-dimensional printing nozzle (110) being assembled to the movement module (130), and the control module (140) driving the three-dimensional printing nozzle (110) through the movement module (140).

12. The three-dimensional printing apparatus (100) as claimed in claim 11, wherein the three-dimensional printing nozzle (110) further comprises a holder (116) disposed at the movement module (130), the nozzle body (111) being detachably assembled to the holder (116).
